# EUROPÄISCHE PATENTSCHRIFT

(11) **EP 0 530 248 B1**
(45) Veröffentlichungstag und Bekanntmachung des Hinweises auf die Patenterteilung: **31.08.1994**
(21) Anmeldenummer: 91909545.5
(22) Anmeldetag: 14.05.1991
(51) Int. Cl.: G11B 19/22

(54) **VERFAHREN ZUM ANHALTEN EINES ROTIERENDEN PLATTENFÖRMIGEN AUFZEICHNUNGSTRÄGERS**
PROCESS FOR STOPPING A ROTATING DISK-SHAPED RECORDING MEDIUM
PROCEDE POUR L'ARRET D'UN SUPPORT D'ENREGISTREMENT ROTATIF EN FORME DE DISQUE

(30) Priorität: 23.05.1990 DE 4016551
(43) Veröffentlichungstag der Anmeldung: 10.03.1993
(73) Patentinhaber: Deutsche Thomson-Brandt GmbH, 78003 Villingen-Schwenningen (DE)
(72) Erfinder: BAAS, Dieter, D-7640 Kehl-Auenheim (DE)
(74) Vertreter: Einsel, Robert, Dipl.-Ing.
(86) Internationale Anmeldenummer: EP9100891
(87) Internationale Veröffentlichungsnummer: WO9118391

(56) Entgegenhaltungen:
- EP-A- 0 322 177
- EP-A- 0 327 109
- EP-A- 0 352 728
- FR-A- 2 470 506
- US-A- 4 629 949
- US-A- 4 779 260

## Beschreibung

Die Erfindung betrifft ein Verfahren zum Anhalten eines rotierenden, plattenförmigen Aufzeichnungsträgers.

CD-Spieler oder Videoplattenspieler sind beispielsweise mit einer Lade- und Entladevorrichtung ausgestattet, in die der Aufzeichnungsträger, eine Compact Disc oder eine Videoplatte, von Hand eingelegt und aus der er von Hand wieder entnommen werden kann. Nach dem Einlegen wird die Platte automatisch in die Abspielposition gebracht. Mittels einer sogenannten STOP-Taste kann der Bediener des CD-Spielers jederzeit das Abspielen einer Platte unterbrechen. Die Platte wird angehalten und automatisch in die Entnahmeposition gebracht, damit sie der Bediener aus der Ladevorrichtung entnehmen kann, um z.B. eine andere Platte einlegen zu können.

Bevor jedoch die Platte aus der Abspielposition in die Entnahmeposition gebracht wird, sollte sie vom Motor des Plattenantriebs möglichst bis zum Stillstand abgebremst werden, um Beschädigungen ihrer empfindlichen Oberfläche während des Entladevorgangs zu vermeiden.

Die Drehzahl einer Platte ist aber nicht konstant, weil es sich bei einem CD-Spieler um ein System handelt, das im Gegensatz zu einem CAV-System, der Abkürzung für Constant-Angular-Velocity, nicht die Winkel-, sondern wie bei einem CLV-System - der Abkürzung für Constant-Linear-Velocity - üblich die Bahngeschwindig- keit konstant hält.

Es kann daher durchaus der Fall eintreten, daß sich die Platte während des Entladevorgangs noch dreht, entweder in der Abspielrichtung oder sogar rückwärts, je nach dem, ob sie vom Motor des Plattenantriebs zu wenig oder zu stark abgebremst wurde. Auch weil die Masse und der Durchmesser von Platte zu Platte streuen und es außerdem die kleine Mini-Disc gibt, kann es vorkommen, daß sich die Platte während des Entladevorgangs noch dreht. Wie bereits erwähnt kann aber die empfindliche Oberfläche einer Platte, die sich während des automatischen Entladevorgangs noch dreht, leicht beschädigt werden.

Um sicher zu stellen, daß die Platte zu Beginn des Entladevorgangs tatsächlich still steht, sollte daher zwischen dem Abbremsen der Platte und dem Entladevorgang eine kurze Wartezeit als zeitlicher Sicherheitsabstand vorgesehen werden, damit die Platte auslaufen kann. Diese Maßnahme hat aber den Nachteil, daß sich der Entladevorgang verzögert.

Aus der EP-A-0 322 177 ist ein Verfahren zum Anhalten eines rotierenden plattenförmigen Aufzeichnungsträgers bekannt.

Der rotierende plattenförmige Aufzeichnungsträger wird durch einen ersten Bremsimpuls abgebremst. Die Zeit, die vom ersten Bremsimpuls an gerechnet vergeht, bis die Drehzahl des rotierenden plattenförmigen Aufzeichnungsträgers auf einen vorgebbaren Wert gesunken ist, wird gemessen; sodann wird ein zweiter Bremsimpuls erzeugt und nach einer Zeit abgeschaltet, die aus der zuvor gemessenen Zeit errechnet wurde.

Es ist daher Aufgabe der Erfindung, ein Verfahren zum Anhalten eines rotierenden plattenförmigen Aufzeichnungsträgers so zu gestalten, daß der rotierende Aufzeichnungsträger zur Entnahme schnell und sicher bis zum Stillstand abgebremst wird.

Die Erfindung löst diese Aufgabe durch folgende Verfahrensschritte
a) der Aufzeichnungsträger wird durch einen ersten Bremsimpuls abgebremst
b) wenn die Drehzahl des Aufzeichnungsträgers auf einen vorgebbaren Wert +N abgesunken ist, wird die Zeit T gemessen, bis die Drehzahl des Aufzeichnungsträgers den entgegengesetzten Wert -N erreicht hat
c) wenn sich die Drehzahl des Aufzeichnungsträgers auf den Wert -N umgekehrt hat, wird die Polarität des ersten Bremsimpulses umgekehrt und
d) nach der Zeit T/2 wird der so gebildete zweite Bremsimpuls beendet.

Eine zweite Lösung der Erfindung sieht vor, die Verfahrensschritte a) bis c) mehrmals zu wiederholen und aus den gemessenen Zeiten T, die jeweils bei der Umkehrung der Drehzahl vergehen, den Mittelwert T_{M} zu bilden und die Dauer des Letzten Bremsimpulses zu T_{M}/2 zu bemessen.

Durch dies Maßnahme wird die Dauer des letzten Bremsimpulses, der den Aufzeichnungsträger zum Stillstand abbremst, genauer bestimmt als bei der ersten erfindungsgemäßen Lösung.

Außerdem sieht die Erfindung eine Vorrichtung zur Durchführung des erstgenannten Verfahrens nach Anspruch 7 vor.

Es zeigen
- Figur 1: eine Anordnung zur Durchführung des erfindungsgemäßen Verfahrens
- Figur 2: ein Impulsdiagramm zur Erläuterung der Erfindung.

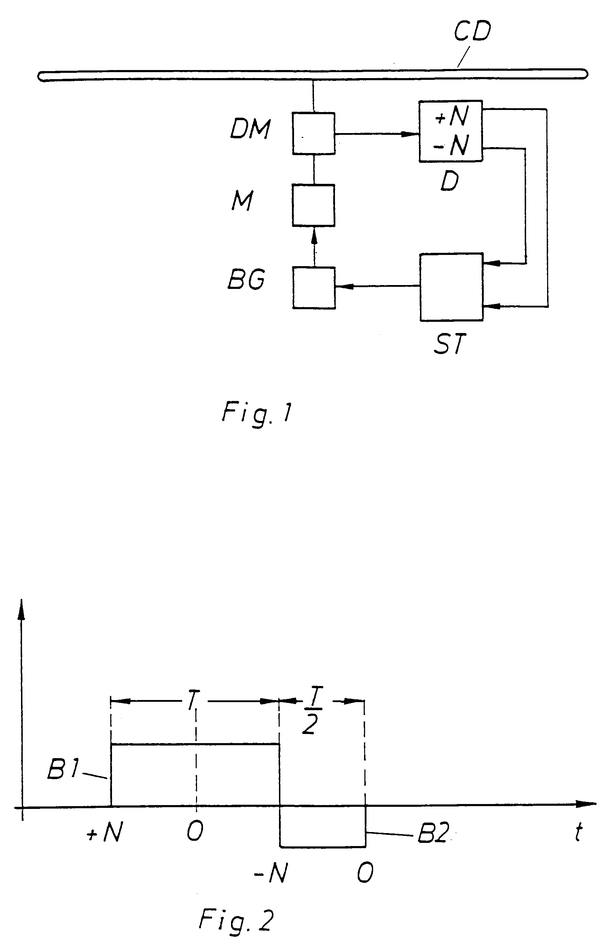

Figur 1 zeigt den Antriebsmotor M, der eine Compact-Disc CD antreibt. Ein Drehzahlmesser DM, der die Drehzahl der Platte CD mißt, ist mit dem Eingang eines Detektors D verbunden, dessen beide Ausgänge mit den beiden Eingängen einer Steuerschaltung ST verbunden sind. Der Ausgang der Steuerschaltung ST ist mit dem Eingang eines Bremsimpulsgebers BG verbunden, dessen Ausgang mit dem Antriebsmotor M verbunden ist.

Zum Anhalten der Platte CD gibt der Bremsimpulsgeber BG einen ersten Bremsimpuls B1 an den Antriebsmotor M ab, wodurch die Platte CD abgebremst wird. Sobald ihre Drehzahl auf einen vorgebbaren Wert +N abgesunken ist, gibt der Detektor D ein erstes Signal an die Steuerschaltung ST ab, welche nun die Zeit T mißt, die vergeht, bis der Detektor D ein zweites Signal an die Steuerschaltung ST abgibt. Weil der erste Bremsimpuls B1 des Bremsimpulsgebers BG weiterhin am Antriebsmotor M anliegt, wird die Platte CD von der Drehzahl +N weiter abgebremst zum Stillstand und anschließend in die entgegengesetzte Drehrichtung beschleunigt. Wenn sich die Drehzahl der Platte CD auf den Wert -N umgekehrt hat, gibt der Detektor D ein zweites Signal an die Steuerschaltung ST ab. Die Steuerschaltung ST, welche die Zeit T zwischen dem ersten und dem zweiten Signal des Detektors D gemessen hat, bewirkt jetzt, daß die Polarität des ersten Bremsimpulses B1 umgekehrt und der so gebildete zweite Bremsimpuls B2 umgekehrter Polarität nach der Zeit T/2 beendet wird. Durch diese Maßnahme wird die Platte CD von der Drehzahl -N sicher und schnell zum Stillstand abgebremst.

Durch den ersten Bremsimpuls B1 sinkt die Drehzahl der Platte CD bis zum Stillstand ab; weil aber der erste Bremsimpuls B1 weiter bestehen bleibt, wird die Platte CD anschließend in die entgegengesetzte Richtung beschleunigt.

Die Erfindung geht nun von der Erkenntnis aus, daß die Zeit T/2, die vergeht, bis die Platte von einer vorgegebenen Drehzahl +N auf null abgesunken ist, ebenso groß ist wie die Zeit, die vergeht, bis die Platte vom Stillstand auf die gleiche Drehzahl jedoch in der entgegengesetzten Richtung beschleunigt wird, und ebenso groß ist, wie die Zeit, die vergeht, bis die Platte von der Drehzahl +N oder -N zum Stillstand abgebremst wird. Wenn sich die Platte mit der Drehzahl -N in der. entgegengesetzten Richtung dreht, bremst daher ein Bremsimpuls entgegengesetzter Polarität die Platte in der Zeit T/2 genau bis zum Stillstand ab.

Ein wesentlicher Vorteil des erfindungsgemäßen Verfahrens liegt darin, daß der Durchmesser und das Massenträgheitsmoment der Platte keine Rolle mehr spielen. Jede Platte wird unabhängig von ihrem Durchmesser und ihrem Massenträgheitsmoment stets sicher und schnell zum Stillstand abgebremst.

Die Erfindung ist für Aufzeichnungs- und/oder Wiedergabegeräte mit einem rotierenden Plattenförmigen Aufzeichnungsträger geeignet wie z.B. CD-Spieler, Videoplattenspieler, DRAW-Disc-Spieler oder magneto-optische Geräte.

## Patentansprüche

1. Verfahren zum Anhalten eines rotierenden plattenförmigen Aufzeichnungsträgers (CD) **kennzeichnet** **durch** folgende Verfahrensschritte:
a) der Aufzeichnungsträger (CD) wird durch einen ersten Bremsimpuls (B1) abgebremst;
b) wenn die Drehzahl des Aufzeichnungsträgers (CD) auf einen vorgebbaren Wert +N abgesunken ist, wird die Zeit T gemessen, die vergeht, bis die Drehzahl des Aufzeichnungsträgers (CD) den umgekehrten Wert -N erreicht hat;
c) wenn die Drehzahl des Aufzeichnungsträgers (CD) sich auf den Wert -N umgekehrt hat, wird die Polarität des ersten Bremsimpulses (B1) umgekehrt und
d) nach der Zeit T/2 wird der so gebildete zweite Bremsimpuls (B2) beendet.

2. Verfahren zum Anhalten eines rotierenden plattenförmigen Aufzeichnungsträgers (CD) **kennzeichnet** **durch** folgende Verfahrensschritte:
a) der Aufzeichnungsträger (CD) wird durch einen ersten Bremsimpuls (B1) abgebremst;
b) wenn die Drehzahl des Aufzeichnungsträgers (CD) auf einen vorgebbaren Wert +N abgesunken ist, wird die Zeit T gemessen, die vergeht, bis die Drehzahl des Aufzeichnungsträgers (CD) den umgekehrten Wert -N erreicht hat;
c) wenn die Drehzahl des Aufzeichnungsträgers (CD) sich auf den Wert -N umgekehrt hat, wird die Polarität des ersten Bremsimpulses (B1) umgekehrt
d) die Verfahrensschritte a) bis c) werden mehrmals wiederholt
e) aus den gemessenen Zeiten T wird der Mittelwert T_{M} ge bildet
f) die Dauer des letzten Bremsimpulses wird zu T_{M}/2 bemessen.

3. Verfahren nach Anspruch 1 oder 2, **dadurch gekennzeichnet,** daß ein Detektor (D) ein erstes Signal an eine Steuerschaltung (ST) abgibt, wenn die Drehzahl des Aufzeichnungsträgers (CD) infolge des ersten Bremsimpulses (B1) auf den vorgebbaren Wert +N abgesunken ist, und daß der Detektor (D) ein zweites Signal an die Steuerschaltung (ST) abgibt, wenn die Drehzahl des Aufzeichnungsträgers (CD) infolge des ersten Bremsimpulses (B1) den entgegengesetzten Wert -N erreicht hat.

4. Verfahren nach Anspruch 2 oder 3, **dadurch gekennzeichnet**, daß die Steuerschaltung (ST) die Zeit T mißt, die vergeht, bis sich die Drehzahl des Aufzeichnungsträgers vom Wert +N zum Wert -N umgekehrt hat.

5. Verfahren nach Anspruch 4, **dadurch gekennzeichnet**, daß die Steuerschaltung (ST) einen Bremsimpulsgeber (BG) ansteuert.

6. Verfahren nach Anspruch 5, **dadurch gekennzeichnet**, daß die Steuerschaltung (ST) zu dem Zeitpunkt, da die Drehzahl des Aufzeichnungsträgers (CD) den Wert -N erreicht hat, im Bremsimpulsgeber (BG) eine Umkehrung der Polarität des ersten Bremsimpulses (B1) bewirkt und den auf diese Weise gebildeten zweiten Bremsimpuls (B2) nach der Zeit T/2 beendet.

7. Vorrichtung zur Durchführung des Verfahrens nach Anspruch 1 mit einem Antriebsmotor (M) zur Drehung eines Aufzeichnungsträgers (CD), einem Drehzahlmesser (DM), der die Drehzahl des Aufzeichnungsträgers (CD) mißt und mit einem Detektor (D) verbunden ist, der mit einer Steuerschaltung (ST) verbunden ist, die ihrerseits mit einem Bremsimpulsgeber (BG) verbunden ist, der mit dem Antriebsmotor (M) für den Aufzeichnungsträger (CD) verbunden ist, wobei der Detektor (D) ein erstes Signal an die Steuerschaltung (ST) abgibt, wenn die Drehzahl des Aufzeichnungsträgers (CD) infolge des ersten Bremsimpulses (B1) auf einen vorgebbaren Wert +N abgesunken ist, **dadurch gekennzeichnet**, daß der Detektor (D) ein zweites Signal an die Steuerschaltung (ST) abgibt, wenn die Drehzahl des Aufzeichnungsträgers (CD) infolge des ersten Bremsimpulses (B1) den entgegengesetzten Wert -N erreicht hat, daß die Steuerschaltung (ST) die Zeit T mißt, die vergeht, bis sich die Drehzahl des Aufzeichnungsträgers vom Wert +N zum Wert -N umgekehrt hat, und daß die Steuerschaltung (ST) zu dem Zeitpunkt, da die Drehzahl des Aufzeichnungsträgers (CD) den Wert -N erreicht hat, im Bremsimpulsgeber (BG) eine Umkehrung der Polarität des ersten Bremsimpulses (B1) bewirkt und den auf diese Weise gebildeten zweiten Bremsimpuls (B2) nach der Zeit T/2 beendet.

## Claims

1. Process for stopping a rotating record-shaped information medium (CD) characterized by the following process steps:
a) the information medium (CD) will be baked down by a first braking pulse (B1);
b) when the rotational speed of the information medium (CD) is reduced to a presettable value +N, the time T is measured, which passes until the rotational speed of the information medium (CD) reaches the reversed value -N;
c) when the rotational speed of the information medium (CD) has reversed to the value -N, the polarity of the first braking pulse (B1) will be reversed and
d) after the time T/2 the such formed second braking pulse (B2) will be terminated.

2. Process for stopping a rotating record-shaped information medium (CD) characterized by the following process steps:
a) The information medium (CD) will be braked down by a first braking pulse (B1);
b) when the rotational speed of the information medium (CD) is reduced to a presettable value +N, the time T is measured, which passes until the rotational speed of the information medium (CD) reaches the reversed value -N;
c) when the rotational speed of the information medium (CD) has reversed to the value -N, the polarity of the first braking pulse (B1) will be reversed;
d) the process steps a) to c) are several times repeated;
e) from the measured times T the mean value T_{M} will be determined;
f) the duration of the last braking pulse is dimensioned to be T_{M}/2.

3. Process according to claims 1 or 2, characterized in that a detector (D) supplies a first signal to a control circuit (ST), when the rotational speed of the information medium (CD) is reduced to the presettable value +N due to the first braking pulse (B1), and that the detector (D) supplies a second signal to the control circuit (ST), when the rotational speed of the information medium (CD) reaches the opposed value -N due to the first braking pulse (B1).

4. Process according to claims 2 or 3, characterized in that the control circuit (ST) measures the time T, which passes until the rotational of the information medium (CD) reverses from value +N to the value -N.

5. Process according to claim 4, characterized in that the control circuit (ST) controls a braking pulse generator (BG).

6. Process according to claim 5, characterized in that the control circuit (ST) at the time, when the rotational speed of the information medium (CD) reaches the value -N, causes the reversal of polarity in the braking pulse generator (BG) of the first braking pulse (B1) and terminates the second braking pulse (B2) formed in this way after the time T/2.

7. Arrangement for realizing the process according to claim 1 having a drive motor (M) for turning an information medium (CD), a revolution (r.p.m.) counter (DM) which measures the rotational speed of the information medium (CD) and is connected to a detector (D) which is turn connected to a control circuit (ST) which is itself connected to a braking pulse generator (BG) which is in turn connected to the drive motor (M) for the information medium (CD), whereby the detector (D) supplies a first signal to the control circuit (ST) when the rotational speed of the information medium (CD) has dropped to a predeterminable value +N as a result of the first braking pulse (B1), **characterized** **in that** the detector (D) supplies a second signal to the control circuit (ST) when the rotational speed of the information medium (CD) has reached the opposing value -N as a result of the first braking pulse (B1), that the control circuit (ST) measures the time T which elapses until the rotational speed of the information medium has reversed from value +N to value -N, and that at the time when the rotational speed of the information medium (CD) has reached the value -N, the control circuit (ST) triggers a reversal of polarity of the first braking pulse (B1) in the braking pulse generator (BG) and terminates the second braking pulse (B2) formed in this way after the time T/2.

## Revendications

1. Procédé pour arrêter un support d'enregistrement rotatif en forme de disque (CD) **caractérisé par** les étapes de procédé suivantes :
a) le support d'enregistrement (CD) est freiné par une première impulsion de freinage (B1) ;
b) lorsque le nombre de tours du support d'enregistrement (CD) est tombé à une valeur qui peut être prédéfinie +N, le temps T qui s'écoule jusqu'à ce que le nombre de tours du support d'enregistrement (CD) ait atteint la valeur inversée - N est mesuré
c) lorsque le nombre de tours du support d'enregistrement (CD) s'est inversé à la valeur -N, la polarité de la première impulsion de freinage (B1) devient renversée et
d) après le temps T/2, la seconde impulsion de freinage (B2) ainsi formée est terminée.

2. Procédé pour arrêter un support d'enregistrement rotatif en forme de disque (CD) **caractérisé par** les étapes de procédé suivantes :
a) le support d'enregistrement (CD) est freiné par une première impulsion de freinage (B1) ;
b) lorsque le nombre de tours du support d'enregistrement (CD) est tombé à une valeur qui peut être prédéfinie +N, le temps T qui s'écoule jusqu'à ce que le nombre de tours du support d'enregistrement (CD) ait atteint la valeur inversée - N est mesuré
c) lorsque le nombre de tours du support d'enregistrement (CD) s'est inversé à la valeur -N, la polarité de la première impulsion de freinage (B1) devient renversée et
d) les étapes de procédé a) à c) sont répétées plusieurs fois
e) la valeur moyenne T_{M} est formée à partir des temps mesurés T
f) la durée de la dernière impulsion de freinage est dimensionnée en T_{M}/2.

3. Procédé selon la revendication 1 ou 2, **caractérisé en ce** qu'un détecteur (D) donne un premier signal à un circuit de commande (ST) lorsque le nombre de tours du support d'enregistrement (CD) est tombé par suite de la première impulsion de freinage (B1) à la valeur qui peut être prédéfinie +N et que le détecteur (D) donne un second signal au circuit de commande (ST) lorsque le nombre de tours du support d'enregistrement (CD) a atteint la valeur opposée -N par suite de la première impulsion de freinage (B1).

4. Procédé selon la revendication 2 ou 3, **caractérisé en ce** que le circuit de commande (ST) mesure le temps T qui s'écoule jusqu'à ce que le nombre de tours du support d'enregistrement soit inversé de la valeur +N à la valeur -N.

5. Procédé selon la revendication 4, **caractérisé en ce** que le circuit de commande (ST) excite un impulseur de freinage (BG).

6. Procédé selon la revendication 5, **caractérisé en ce** que le circuit de commande (ST) provoque au moment où le nombre de tours du support d'enregistrement (CD) a atteint la valeur -N une inversion de la polarité de la première impulsion de freinage (B1) dans l'impulseur de freinage (BG) et termine après le temps T/2 la seconde impulsion de freinage (B2) formée de cette manière.

7. Dispositif pour exécuter le procédé selon la revendication 1 avec un moteur d'entraînement (M) pour la rotation d'un support d'enregistrement (CD), un mesureur de nombre de tours (DM) qui mesure le nombre de tours du support d'enregistrement (CD) et qui est relié à un détecteur (D) qui est relié à un circuit de commande (ST) qui est, de son côté, relié à un impulseur de freinage (BG) qui est relié au moteur d'entraînement (M) pour le support d'enregistrement (CD), le détecteur (D) donnant un premier signal au circuit de commande (ST) lorsque le nombre de tours du support d'enregistrement (CD) est tombé par suite de la première impulsion de freinage (B1) à une valeur qui peut être prédéfinie +N, **caractérisé en ce** que le détecteur (D) donne un second signal au circuit de commande (ST) lorsque le nombre de tours du support d'enregistrement (CD) a atteint par suite de la première impulsion de freinage (B1) la valeur opposée -N, que le circuit de commande (ST) mesure le temps T qui s'écoule jusqu'à ce que le nombre de tours du support d'enregistrement s'est renversé de la valeur +N à la valeur -N et que le circuit de commande (ST) provoque une inversion de la polarité de la première impulsion de freinage (B1) dans l'impulseur de freinage (BG) au moment où le nombre de tours du support d'enregistrmeent (CD) a atteint la valeur -N et termine après le temps T/2 la seconde impulsion de freinage (B2) formée de cette manière.
